# EUROPEAN PATENT SPECIFICATION

(11) **EP 2 134 220 B1**
(45) Date of publication and mention of the grant of the patent: **28.07.2010**
(21) Application number: 08751546.6
(22) Date of filing: 11.04.2008
(51) Int. Cl.: A47G 19/10, A47J 47/16

(54) **VERTICAL PLATE SEPARATOR**
SEPARATOR MIT EINER VERTIKALEN PLATTE
SÉPARATEUR DE PLAQUES VERTICALES

(30) Priority: 13.04.2007 IT RM20070087 U
(43) Date of publication of application: 23.12.2009
(73) Proprietor: Campoli, Fabio, 00040 Rocca Priora (RM) (IT); Vecchini, Lorena, 04013 Latina (LT) (IT)
(72) Inventor: Campoli, Fabio, 00040 Rocca Priora (RM) (IT); Vecchini, Lorena, 04013 Latina (LT) (IT)
(74) Representative: Sneider, Massimo
(86) International application number: PCT/IT2008/000239
(87) International publication number: WO 2008/126124

(56) References cited:
- WO-A-90/00875
- DE-A1- 2 456 768
- US-A- 1 598 409
- US-A- 1 759 645
- US-A- 4 984 690

## Description

### Field of the Invention

The subject of the present proposal is a device of variable height and dimensions, which device, when placed on top of a plate containing food, can support yet another plate on top of itself, making possible a more rational use of the available space on a table or, to give another example, in an oven.

### State of the art

The first of the problems which the device referred to in the present proposal is meant to resolve, with respect to both eating at home and food service open to the public, is the lack of sufficient space for placing the plates containing the servings, or for preserving or heating dishes until it is time to consume them.

The second problem is protecting the servings on the plate from the possibility of accidental contamination.

The need to stack plates containing servings one on top of the other, in order to reduce the space occupied on the support surface, both during cooking and when the dishes have already been prepared and must be preserved, is a well known problem; for some time now there have been devices on the market designed to serve as distancing supports for stacking plates one on top of the other; ready examples are the devices normally supplied with microwave ovens and typically consisting of a metal grill constructed according to a circular layout and outfitted with distancing legs.

Document US-1759645 discloses a plate rack.

The main defect of the devices on the market, generally used, as was noted, in microwave ovens, is that they have fixed dimensions, meaning that the support legs are often too far apart to fit onto the plate on which they are supposed to rest, or the legs are too close together, meaning that they rest on the portion of the plate that is supposed to be occupied by the servings. This makes it necessary to have support devices of different sizes on hand, so that they can be varied to fit the diameters of the plates on which they are supposed to rest. As can easily be imagined, this is an extremely inconvenient and costly approach, and such devices are rarely used.

The second problem referred to is that of protecting the servings found on the plates from possible contamination. N This problem is currently addressed by placing domes made of glass or other, similar materials on top of the plates, or by spreading polyethylene sheets suitable for foodstuffs on top of the servings; under the first option, the domes made of glass or similar materials make it impossible to pile the plates one on top of the another, while, in the second instance, the sheet of polyethylene frequently sticks to the serving, at the very least ruining its appearance when it comes time to uncover the dish.

The device referred to in the present proposal provides an advantageous solution to both problems.

### Description of the invention

Under the present proposal, the device consists of at least three telescoping and retractable horizontal elements connected with each other in a hinged manner by extendable vertical elements that take the form of cones, conical trunks or similar shapes, and which are designed with their larger base facing upward, in order to serve as supports for plates.

By varying the lengths of the horizontal telescoping elements, the dimensions of the surface area of support can be varied, with a corresponding variation in the point of support of the base of the vertical elements, while variations in the length of the vertical elements result in variations in the height of the support base, with respect to the plate beneath it. Furthermore, the cylindrical vertical elements serve as junctures between the horizontal elements, making it possible to vary the reciprocal angle between the horizontal elements and, as a result, adjust the form of the device to fit the form of the plate.

Both horizontal and vertical telescoping elements may be made from whatever materials are held most suitable, and the support surface of the vertical elements is made of slip-resistant material, in order to prevent unwanted shifting of the device on the plate or the plate on the device.

### Description of the drawings

What has been stated up to this point can be better understood through a description of a version of the device, constituting only one example of the different versions that could be constructed, and provided with regard to the drawings included with the present, in which:
Figure 1 presents a layout view of the device in its closed position
Figure 2 presents a layout view of the device in its position of use
Figure 3 presents a layout view of the device in the open position for long plates

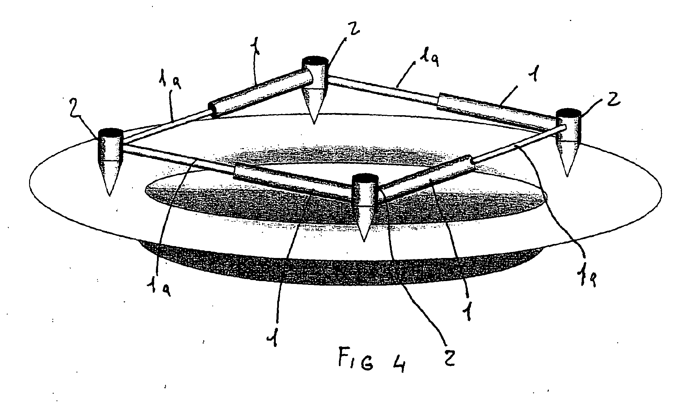

Figure 4 presents a prospective view of the device resting on a plate
Figure 5 to 8 present side views showing the possibilities for positioning the lifts
Figure 9 presents a side view of a number of the lift elements
Figure 10 presents a cross-section of the distancing assembly and the lift elements
Figure 11 presents a view from above of an element of the device

### Description of an example of construction

With reference to the figures presented above, the device that is the subject of the present proposal consists of at least three horizontal telescoping elements (1) connected to each other in jointed fashion by at least three vertical elements of variable length (2), which, from this point forward, shall be referred to as lifts, for the sake of brevity, with the result that the upper faces of these lifts (2) provide stable support surface for a plate placed on top of them.

The length of the horizontal elements (1) can be varied by extracting or retracting elements (1a) in elements (1) and setting them fast, through the use of devices that keep them from sliding, once the desired length has been reached.

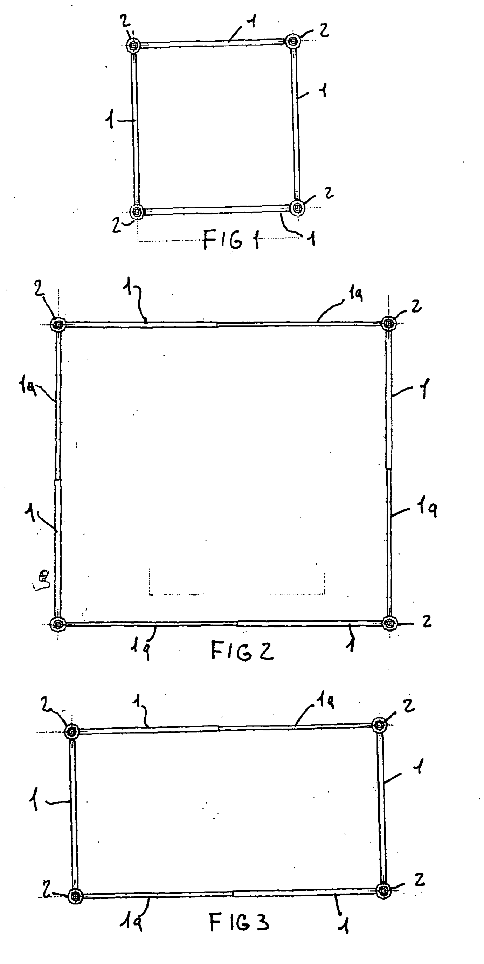

The length of the horizontal elements (1) determines the reciprocal distances between the lifts (2), whose upper surface area (3) constitutes the base on which the upper plate rests, while the bases (4) of the lifts (2) rest on the lower plate (5), as can easily be seen in Fig. 3.

In order to minimise the bulk of the lower support point of the lifts (2) on the plate (5), the preferred forms for the lifts are a cone or the trunk of a cone, with the support point always being smaller in size than the upper base (3) meant to hold the plate.

The height of the lift elements (2) can be varied, in order to adjust them to the height of the food serving found on the plate (5); to this end, the lifts (2) can be made of two pieces whose reciprocal distance may be varied by using, for example, a screw mechanism or a sliding assembly.

The presence of jointed elements at the points where the horizontal telescoping elements (1, 1a) connect with the lifts (2) makes it possible to "close" the vertical plate separator that is the subject of the present proposal, by bringing together, as in the case of the four-sided array shown in figure 2, two of the vertical elements (2) laid out along the same diagonal.

The presence of the jointed elements at the connecting points of the telescoping horizontal elements (1, 1a) also makes it possible to adjust the horizontal layout of the plate separator to fit the plate on which it is to rest, as well as the plate which it must support, giving it a rectangular form in the case of the oval plate shown in the illustration (figure 3).

As noted earlier, the upper and lower faces of the lifts (2) are covered with anti-slip material in order to ensure greater stability of the separator with respect to the plate on which it rests and of the upper plate placed on top of the separator.

As is readily apparent, a vertical stack consisting of an alternating series of plates and separators can be formed, in order to make the most efficient possible use of the support surface.

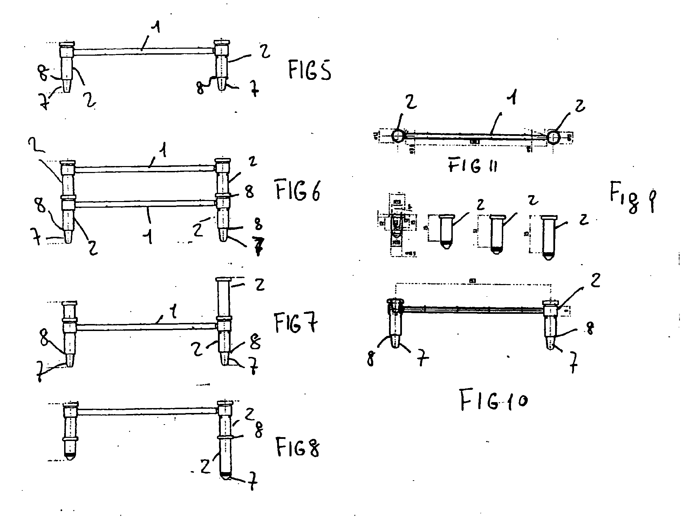

In one form of the construction, the lifts (2) consist of a series of elements of different heights, as shown in figures 5 to 9, whose upper portions (6) are hollow, while the lower portions (7) are conical and equipped with a protective lip (8); the protective lip (8) stabilises the lifts when they are placed one on top of the other, as shown in figures 6, 7 and 8.

A sheet of polyethylene wrap for foodstuffs can be placed between the horizontal elements (1, 1a), in order to preserve the servings arranged on the plates below. The variable-size vertical plate separator referred to in the present proposal can be made of any material held to be suitable, such as metals, including precious metals, as well as plastics, with thermoplastic resins being a possibility, or non-metallic materials, such as ceramics, pyrex etc..

## Claims

1. Vertical plate separator distinguished by the fact that it consists of:
- at least three horizontal telescoping elements (1, 1a);
- at least three lifts (2) of variable height equipped with a flat upper face (3);
- jointed connecting elements between the horizontal elements (1, 1a) and the lifts (2) referred to above;
with the horizontal elements (1, 1a) being connected to the lifts (2) in a position that ensures that the upper face (3) of the lifts (2) is in a higher position than the upper side of the horizontal elements (1, 1a), and with the horizontal elements (1, 1a) and the lifts (2) being arranged in such a way as to constitute a device capable of resting stably on top of a plate and of supporting, at an adequate distance from the first plate, and in a stable manner, a second plate placed on the flat upper face (3) of the lifts (2).

2. A vertical plate separator according to claim 1, distinguished by the fact that the lifts (2) consist of a series of elements of different height whose upper portions (6) are hollow, while the lower portions (7) are conical and equipped with a protective lip (8); the protective lip (8) stabilises the lifts when they are placed one on top of the other.

3. A vertical plate separator according to claim 1, distinguished by the fact that the lifts (2) are conical, presenting a flat surface (3) facing upwards.

4. A vertical plate separator according to claim 1, distinguished by the fact that the lifts (2) are conical trunks whose larger flat surface (3) faces upwards.

5. A vertical plate separator according to claim 1, distinguished by the fact that the lifts (2) have forms compatible with their function.

6. A vertical plate separator according to claim 1, distinguished by the fact that the lifts (2) are equipped with screw-operated devices for varying their height.

7. A vertical plate separator according to claim 1, distinguished by the fact that the lifts (2) are equipped with sliding mechanisms that make it possible to vary their height, as well as devices designed to stop the sliding action in the desired position.

8. A vertical plate separator according to claim 1, distinguished by the fact that the telescoping horizontal elements (1, 1a) are equipped with device to block the sliding action in the desired position.

9. A vertical plate separator according to claim 1, distinguished by the fact that the jointed elements connecting the lifts (2) and the horizontal elements (1, 1a) make it possible to vary the reciprocal distance between the horizontal elements.

10. A vertical plate separator according to claim 1, distinguished by the fact that there are four horizontal telescoping elements (1, 1a) and four lifts (2).

11. A vertical plate separator according to claim 1, distinguished by the fact that there are more than four horizontal telescoping elements (1, 1a) and more than four lifts (2).

12. A vertical plate separator according to claim 1, distinguished by the fact that the upper faces of the lifts (2) are made with anti-slip material.

## Patentansprüche

1. Senkrechter Plattenabscheider, der sich **dadurch** auszeichnet, daß er folgendes umfaßt :
mindestens 3 horizontale teleskopische Elemente (1, 1a),
mindestens 3 Heber (2) verschiedener Höhe, mit einer flachen Oberseite (3),
Verbindungselemente zwischen den horizontalen (1, 1a) und den vorgenannten Hebern (2),
wobei die horizontalen Elemente (1, 1a) mit den Hebern (2) in einer Position verbunden sind, die gewährleistet, daß die Oberseite (3) der Heber (2) höher liegt als die obere Seite der horizontalen Elemente (1, 1a); die horizontalen Elemente (1, 1a) und die Heber (2) sind in der Weise angeordnet, daß sie eine Vorrichtung bilden, die in der Lage ist, standfest auf der Krone einer Platte zu stehen und in geeignetem Abstand von der ersten Platte eine zweite Platte standfest zu lagern, die sich auf der oberen ebenen Seite der Heber (2) befindet.

2. Senkrechter Plattenabscheider gemäß Anspruch 1, der sich **dadurch** auszeichnet, daß die Heber (2) aus einer Reihe von Elementen verschiedener Höhe besteht, deren oberen Abschnitte (6) konkav sind, während die unteren Abschnitte (7) kegelförmig und mit einem Schutzrand (8) versehen sind; der Schutzrand festigt die Heber, wenn sie sich auf dem Gipfel des anderen befinden.

3. Senkrechter Plattenabscheider gemäß Anspruch 1, der sich durch die Tatsache auszeichnet, daß die Heber (2) kegelförmig sind und eine nach oben gewendete flache Oberfläche (3) haben.

4. Senkrechter Plattenabscheider gemäß Anspruch 1, der sich durch die Tatsache auszeichnet, daß die Heber (2) die Form eines Kegelstumpfes haben, dessen flache breitere Oberfläche (3) nach oben gerichtet ist.

5. Senkrechter Plattenabscheider gemäß Anspruch 1, der sich durch die Tatsache auszeichnet, daß die Heber (2) Formen bilden, die mit ihrer Funktion vereinbar sind.

6. Senkrechter Plattenabscheider gemäß Anspruch 1, der sich durch die Tatsache auszeichnet, daß die Heber (2) mit von Schrauben aktivierten Vorrichtungen ausgestattet sind, die erlauben, ihre Höhe zu verändern.

7. Senkrechter Plattenabscheider gemäß Anspruch 1, der sich durch die Tatsache auszeichnet, daß die Heber (2) mit Gleitvorrichtungen versehen sind, die erlauben, ihre Höhe zu verändern, wie auch mit Anordnungen, die in der Weise konstruiert sind, daß sie die Gleitbewegung in der gewünschten Position blockieren.

8. Senkrechter Plattenabscheider gemäß Anspruch 1, der sich durch die Tatsache auszeichnet, daß die teleskopischen horizontalen Elemente (1, 1a) mit einer Anordnung versehen sind, die dazu bestimmt ist, die Gleitbewegung in der gewünschten Position zu blockieren.

9. Senkrechter Plattenabscheider gemäß Anspruch 1, der sich durch die Tatsache auszeichnet, daß die Elemente, die die Heber (2) und die horizontalen Elemente verbinden (1, 1a), erlauben, den gegenseitigen Abstand zwischen den horizontalen Elementen zu verändern.

10. Senkrechter Plattenabscheider gemäß Anspruch 1, der sich durch die Tatsache auszeichnet, daß vier horizontale teleskopische Elemente (1, 1a) vorhanden sind und vier Heber (2).

11. Senkrechter Plattenascheider gemäß Anspruch 1, der sich durch die Tatsache auszeichnet, daß mehr als vier teleskopische Elemente (1, 1a) und mehr als vier Heber (2) vorhanden sind.

12. Senkrechter Plattenabscheider gemäß Anspruch 1, der sich durch die Tatsache auszeichnet, daß die Oberseiten der Heber (2) aus rutschfestem Material hergestellt sind.

## Revendications

1. Séparateur vertical à plaques **caractérisé par le fait qu'**il comprend:
au moins trois éléments télescopiques horizontaux (1, 1a), au moins trois éléments de levage (2) de hauteur variable, équipés dont 1a face supérieure est plate (3),
éléments de liaison de l'unité entre les éléments horizontaux (1, 1a) et les éléments de levage (2) précités;
les éléments horizontaux (1, 1a) étant rattachés aux éléments de levage (2) dans une position qui assure que 1a face supérieure (3) des éléments de levage (2) soit plus haute que le côté supérieur des éléments horizontaux (1, 1a), et les éléments horizontaux (1, 1a) et les éléments de levage (2) étant disposés de manière telle qu'ils constituent un dispositif capable de rester stable au sommet d'une plaque et de supporter, à une distance adéquate de la première plaque, de manière stable, une deuxième plaque située sur la face supérieure plate (3) des éléments de levage (2).

2. Un séparateur vertical à plaques selon la revendication 1, **caractérisé par le fait que** les éléments de levage (2) sont formés d'une série d'éléments de différente hauteur dont les portions supérieures (6) sont concaves, tandis que les portions inférieures (7) sont comique et munies d'un bord de protection (8); le bord de protection 88) stabilise les éléments de levage quand ils sont placés l'un au sommet de l'autre.

3. Un séparateur vertical à plaques selon la revendication 1, **caractérisé par le fait que** les éléments de levage (2) sont comique, et présentent une surface plate (3) tournée vers le haut.

4. Un séparateur vertical à plaques selon la revendication 1, **caractérisé par le fait que** les éléments de levage (2) sont en tronc de cône dont la surface plate la plus large (3) est tournée vers le haut.

5. Un séparateur vertical à plaques selon la revendication 1, **caractérisé par le fait que** les éléments de levage (2) ont des formes compatibles avec leur fonction.

6. Un séparateur vertical à plaques selon la revendication 1, **caractérisé par le fait que** les éléments de levage (2) sont équipés de dispositifs munis de vis permettano de régler leur hauteur.

7. Un séparateur vertical à plaques selon la revendication 1, **caractérisé par le fait que** les éléments de levage (2) sont équipés de mécanismes de glissement qui permettent de régler leur hauteur, ainsi que de dispositifs conçus pour arrêter l'action de glissement dans la position désirée.

8. Un séparateur vertical à plaques selon la revendication 1, **caractérisé par le fait que** les éléments télescopiques horizontaux (1, 1a) sont munis d'un dispositif de blocage de l'action de glissement dans la position désirée.

9. Un séparateur vertical à plaques selon la revendication 1, **caractérisé par le fait que** les éléments associés qui unissent les éléments de levage (2) aux éléments horizontaux (1, 1a) permettent de modifier la distance entre les éléments horizontaux.

10. Un séparateur vertical à plaques selon la revendication 1, **caractérisé par le fait qu'**il y a quatre éléments télescopiques horizontaux (1, 1a) et quatre éléments de levage (2).

11. Un séparateur vertical à plaques selon la revendication 1, **caractérisé par le fait qu'**il y a plus de quatre éléments télescopiques horizontaux (1, 1a) et plus de quatre éléments de levage (2).

12. Un séparateur vertical à plaques selon la revendication 1, **caractérisé par le fait que** les faces supérieures des éléments de levage (2) sont faites d'un matériau antiglisse.
